# EUROPEAN PATENT SPECIFICATION

(11) **EP 1 731 401 B1**
(45) Date of publication and mention of the grant of the patent: **12.11.2008**
(21) Application number: 06115123.9
(22) Date of filing: 08.06.2006
(51) Int. Cl.: B62D 1/26

(54) **Transport vehicle having wheels with tyres**
Räder mit Reifen habendes Transportfahrzeug
Véhicule de transport ayant des roues avec pneus

(30) Priority: 08.06.2005 FR 0505823
(43) Date of publication of application: 13.12.2006
(73) Proprietor: Iveco France S.A., 69200 Vénissieux (FR)
(72) Inventor: Rey, Philippe, 69320 Feyzin (FR)
(74) Representative: Borsano, Corrado

(56) References cited:
- EP-A- 0 384 105
- GB-A- 2 154 525

## Description

The present invention concerns a transport vehicle having wheels with tyres. The invention is aimed at all kinds of transport vehicles which cover a route which includes at least one station stop, during which people are likely to board the vehicle, or also to alight from it. It is aimed at such a vehicle, which may or may not be driven in a dedicated lane, in particular by the means of electric wires, of rails or even of optic means.

This type of transport vehicle typically includes a chassis mounted on at least one axle, which supports wheels having rubber tyres. In these conditions, transport vehicles in the sense of the invention include in particular, but not exclusively, buses and also trolleybuses.

GB 2 154 525 discloses a steering arrangement wherein an arm, associated with an axle, supports a roller. A pneumatic cylinder is suitable to rotate a roller holder upwards, so that the roller is in a vertical and retracted position, or downward so that the roller is in a horizontal position, protruding from the vehicle. In the latter configuration, the roller may still be pushed upwards by an obstacle, against the force exerted by the cylinder, which urges the roller back downwards afterwards.

This having being specified, the invention aims to improve such transport vehicles, in particular with regard to their steering, as well as the protection of the sides of their tyres.

To this end, it has as its object a transport vehicle, notably a bus or a trolleybus, according to appended claim 1. Other embodiments of the invention are the object of the appended dependent claims.

The invention will be described below, with reference to the accompanying drawings, provided purely by way of non-limitative examples, in which:
- figure 1 is a back view, illustrating in particular an axle and a wheel on a tyre belonging to a transport vehicle according to the invention;
- figures 2 to 4 are back views similar to figure 1, illustrating three steps in the use of the transport vehicle illustrated in said figure 1.

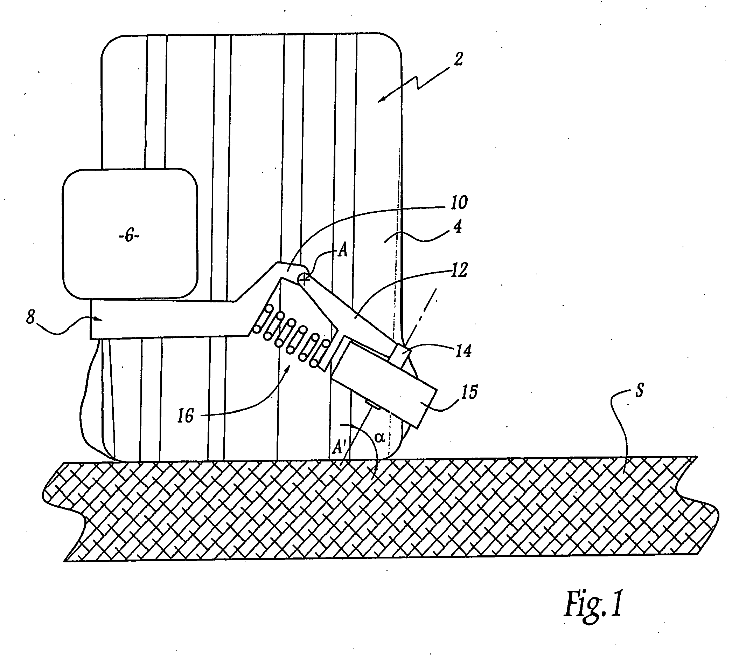

The transport vehicle according to this invention, illustrated partially in figures 1 to 4, is for example a bus that is guided on a dedicated lane, specifically by means that are not illustrated. However, as a non-limitative variant, it could also be a nonguided bus, or also a trolleybus.

This vehicle includes, as is generally known, a body that is not illustrated, equipped with a platform that is also not illustrated, allowing users to access the vehicle. This body sits on wheels, only one of which, marked 2, is illustrated in figures 1 to 4. According to this invention, said wheel 2 is equipped with a tyre, 4, while the bearing surface of the vehicle is marked S.

Furthermore, the vehicle is equipped with a suspension 6, of a type that is generally known, allowing to vary the difference in height between the vehicle body and an axle 8, on which the wheel 2 is mounted. At its side extremity, this axle 8 has a point 10, which protrudes upwards obliquely, on which an arm 12 is articulated. The corresponding articulation axis, marked A, extends perpendicular to the diagram plane, so that it is parallel to the direction that the vehicle is travelling in.

At its tip opposite the point 10, the articulated arm 12 supports a pin 14, with its main axis A', on which a classic type roller 15 is mounted. This second axis A' is located in the plane of the diagram, so that it is perpendicular to the aforementioned advancing direction of the vehicle. Moreover, this axis A' forms an angle α with the horizontal, which is for instance around 65°.

Lastly, the invention includes a prestressed spring 16, acting as a damping element, which is inserted between the walls opposite the point 10 and the arm 12. It will be observed that this spring is situated generally below the axis A, so that it limits the downwards movement of the arm 12, as will be seen in more detail below.

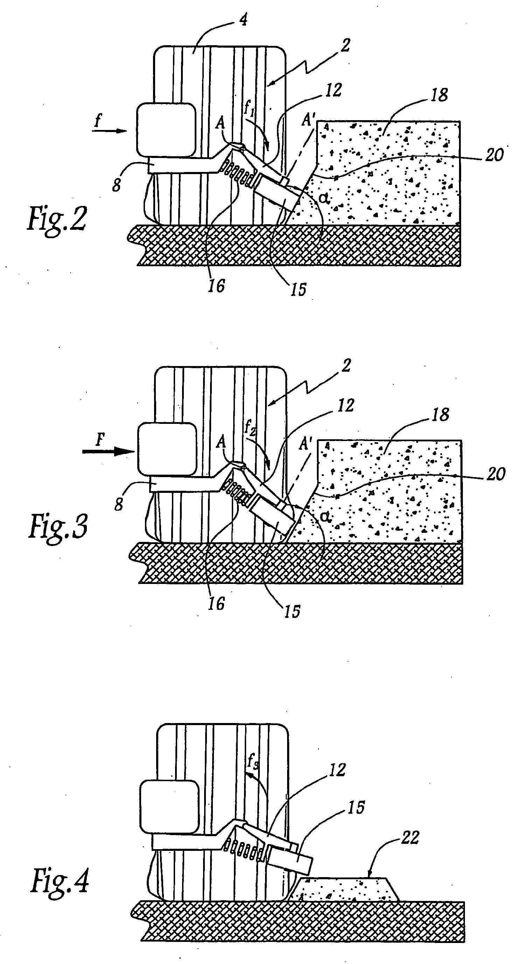

The working of the transport vehicle described above shall now be described below, with reference to figures 2 to 4.

Figure 2 illustrates the normal functioning of the transport vehicle according to the invention. This drawing shows an edging 18, which extends alongside the path along which the vehicle travels. This edging, which in particular could be a pavement or a platform, has in this case an sloping part 20, which forms the same angle α with the horizontal as the axis A' does.

We can presume that the transport vehicle has a component of lateral movement, marked f, which tends to push it back towards the edging 18. However, in this figure 2, it is presumed that the value of this component is within nominal ranges, i.e. the force f presents a relatively low value.

In such conditions, the roller 15, mounted on the pin 14, begins to rotate around its axis A'. Meanwhile, the arm 12 tends to pivot downwards, as indicated by arrow f₁, being limited by the presence of the spring 16. The roller 15 therefore does not retract from the tyre, given that the lateral force to which it is subjected is relatively low. As a result, it continues to abut against the edging 18, in particular so that it ensures a guiding function for the vehicle.

Figure 3 illustrates the behaviour of the transport vehicle, according to the invention, when it is subjected to a lateral movement, the component F of which is considerably higher than component f in figure 2. In these conditions, the roller 15 firstly abuts against the edging 18, as described above, so that the arm 12 also pivots in a downwards direction, as indicated by arrow f₂.

However, contrary to what takes place in figure 2, the lateral force F is higher than the return force of the spring 16, so that the roller 15 is entirely retracted into the tyre. This therefore allows the axle 8 to be protected, as well as the roller 15 and the arm 12 which supports it.

Figure 4 illustrates the functioning of the transport vehicle according to this invention, as it travels near an obstacle 22, which is for example a speed break device, or one known as a sleeping policeman, an abnormally prominent drain cover, or even a low kerb on a pavement when the vehicle crosses said pavement laterally. In such conditions, said obstacle 22 exerts an upwards force onto the roller 15, which tends to make the arm 12 pivot as indicated by arrow f₃.

Then, once the vehicle has passed over this obstacle, the aforesaid arm 12 is pushed downwards again, by a return spring (not shown), so that it returns to its original position, illustrated in figure 1. This measure is advantageous as it allows the vehicle's road clearance to be maintained, whilst guaranteeing the mechanical integrity of the arm 12 and the roller 15.

As an additional variation, which is also not illustrated, the rotation axis of the roller, in relation to the pivoting arm or to the sliding rod, can be vertical. In this case, the roller is suitable to cooperate with an edging which also has a vertical side.

The roller according to this invention can be adapted to the different axles of the vehicle. Thus, in the case of a steering axle, it carries out a guiding function, whilst providing the driver with a sensory aid thanks to a kinaesthetic type information. Indeed, the driver is able to directly perceive the vibration caused by the roller, or the stress return that it undergoes.

In the case in which the roller according to this invention is used on a following axle, it is able to ensure a correction of the path in order to align the vehicle, but also to compensate for the vehicle's faults, such as skewed movement. Said roller also makes it possible to compensate for deviation due to external stresses, such as the lateral banking of the wheel or the presence of a side wind, as well as improving the gap between the vehicle and the platform, by bringing the vehicle to rest against the platform.

Furthermore, whatever type of axle it is mounted on, the roller can be placed only on the right-hand side for a vehicle travelling on the right, but equally on the two sides, that is to say on the right and on the left. In the latter case, the roller can thus form a system for limiting the sway of the vehicle.

The roller according to this invention can be included in the width without coming under any regulations, in the case of a non-guided system such as that described in figures 1 to 4, for example.

It should be noted that, as an advantage, the roller according to this invention does not make the tyre work in the area in which it slides on the ground, but in the area of deviation of the tyre. This makes it possible to preserve the mechanical integrity of the tyre.

Furthermore, this roller is positioned in such a way that it comes into contact with the edging before the tyre comes into contact with it, creating a path of approach with a low angle of incidence, in particular less than 2°.

## Claims

1. Transport vehicle, in particular a bus or trolleybus, including a chassis, resting on at least one axle (8 ; 108) connected to wheels (2 ; 102) mounted on tyres (4 ; 104), and at least one roller (15 ; 115), mounted on a support (10 ; 110) secured in relation to said axle (8 ; 108), said roller being mounted in a rotational manner around an axis (A') on an arm (12), which is suitable to pivot in relation to the support (10) around another axis (A) and being suitable to abut against an edging (18 ; 118) protruding in relation to a surface (S) on which the vehicle is travelling, **characterised in that** it includes means (16) of an elastic nature for limiting the pivoting of the arm (12) in relation to the support (10) in a downwards direction.

2. Transport vehicle according to claim 1, **characterised in that** the other axis (A) is parallel to the direction in which the transport vehicle is moving.

3. Transport vehicle according to claim 1, **characterised in that** the means for limiting the pivoting include at least one spring (16).

4. Transport vehicle according to any one of the previous claims, **characterised in that** the rotation axis (A') of the roller (15 ; 115) extends perpendicularly to the direction in which the transport vehicle is travelling.

5. Transport vehicle according to claim 4, **characterised in that** the rotation axis (A') of the roller (15; 115) extends obliquely, in particular forming an angle (a) of around 65° in relation to the horizontal.

6. Transport vehicle according to claim 4, **characterised in that** the rotation axis of the roller is vertical.

## Patentansprüche

1. Transportfahrzeug, insbesondere ein Omnibus oder ein Oberleitungsomnibus samt Chassis, welches auf mindestens einer Achse (8) aufsitzt, welche verbunden ist mit Rädern (2), auf welche Reifen (4) montiert sind, und mit mindestens einer Rolle (15), auf die eine in Bezug auf die genannte Achse (8) befestigte Stützvorrichtung (10) montiert ist, wobei die genannte Rolle um eine Achse (A') rotierend auf einen Arm (12) montiert ist, welcher geeignet ist, in Bezug auf die Stützvorrichtung (10) um eine andere Achse (A) zu schwenken, und ferner geeignet ist, gegen eine Berandung (18) zu stoßen, welche von einer Fläche (S), auf welcher das Fahrzeug fährt, absteht, **dadurch gekennzeichnet, dass** es Mittel (16) elastischer Art enthält, welche die Schwenkbewegung des Arms (12) in Bezug auf die Stützvorrichtung (10) bei der nach unten gerichteten Bewegung begrenzen.

2. Transportfahrzeug nach Anspruch 1, **dadurch gekennzeichnet, dass** die andere Achse (A) parallel zu der Richtung verläuft, in welcher sich das Transportfahrzeug bewegt,

3. Transportfahrzeug nach Anspruch 1, **dadurch gekennzeichnet, dass** die Mittel zur Begrenzung der Schwenkbewegung mindestens eine Feder (16) enthalten.

4. Transportfahrzeug nach irgend einem der vorangegangenen Ansprüche, **dadurch gekennzeichnet, dass** die Rotationsachse (A') der Rolle (15) sich rechtwinklig zu der Richtung erstreckt, in welcher das Transportfahrzeug fährt.

5. Transportfahrzeug nach Anspruch 4, **dadurch gekennzeichnet, dass** sich die Drehachse (A') der Rolle (15) sich schräg erstreckt und dabei insbesondere einen Winkel (a) von ungefähr 65° gegenüber der Horizontalen bildet.

6. Transportfahrzeug nach Anspruch 4, **dadurch gekennzeichnet, dass** die Drehachse der Rolle vertikal verläuft.

## Revendications

1. Véhicule de transport, en particulier un bus ou trolleybus, comprenant un châssis, reposant sur au moins un essieu (8 ; 108) raccordé aux roues (2 ; 102) montées sur des pneus (4 ; 104), et au moins un cylindre (15 ; 115) monté sur un support (10 ; 110) fixé par rapport audit essieu (8 ; 108) ledit cylindre étant monté d'une manière rotative autour d'un axe (A') sur un bras (12), qui est approprié pour pivoter par rapport au support (10) autour d'un autre axe (A) et étant approprié pour venir en butée contre un bord (18 ; 118) faisant saillie par rapport à une surface (S) sur laquelle le véhicule se déplace, **caractérisé en ce qu'**il comprend des moyens (16) de nature élastique pour limiter le pivotement du bras (12) par rapport au support (10) dans une direction descendante.

2. Véhicule de transport selon la revendication 1, **caractérisé en ce que** l'autre axe (A) est parallèle à la direction dans laquelle le véhicule de transport se déplace.

3. Véhicule de transport selon la revendication 1, **caractérisé en ce que** les moyens pour limiter le pivotement comprennent au moins un ressort (16).

4. Véhicule de transport selon l'une quelconque des revendications précédentes, **caractérisé en ce que** l'axe de rotation (A') du cylindre (15 ; 115) s'étend perpendiculairement à la direction dans laquelle le véhicule de transport se déplace.

5. Véhicule de transport selon la revendication 4, **caractérisé en ce que** l'axe de rotation (A') du cylindre (15 ; 115) s'étend obliquement, en particulier formant un angle (a) d'environ 65° par rapport à l'horizontale.

6. Véhicule de transport selon la revendication 4, **caractérisé en ce que** l'axe de rotation du cylindre est vertical.
